# EUROPÄISCHE PATENTSCHRIFT

(11) **EP 3 516 140 B1**
(45) Veröffentlichungstag und Bekanntmachung des Hinweises auf die Patenterteilung: **18.08.2021**
(21) Anmeldenummer: 17780316.0
(22) Anmeldetag: 18.09.2017
(51) Int. Cl.: E05B 81/76, E05B 85/14, E05B 77/04, E05B 83/18

(54) **ENTRIEGELUNGSEINHEIT MIT EINEM VARIABLEN AUSLÖSE-SCHALTPUNKT**
UNLOCKING UNIT HAVING A VARIABLE TRIGGER SWITCH POINT
UNITÉ DE DÉVERROUILLAGE À POINT DE COMMUTATION DE DÉCLENCHEMENT VARIABLE

(30) Priorität: 22.09.2016 DE 102016218206
(43) Veröffentlichungstag der Anmeldung: 31.07.2019
(73) Patentinhaber: Volkswagen Aktiengesellschaft, 38440 Wolfsburg (DE)
(72) Erfinder: HANSEN, Ralf, 38165 Lehre (DE)
(86) Internationale Anmeldenummer: PCT/EP2017/073427
(87) Internationale Veröffentlichungsnummer: WO 2018/054817

(56) Entgegenhaltungen:
- DE-A1- 19 930 861
- DE-A1-102005 040 761
- DE-A1-102006 048 373
- DE-A1-102013 013 176

## Beschreibung

Die Erfindung betrifft eine Entriegelungseinheit zum Entriegeln eines öffenbaren Verschlusselementes, insbesondere einer Heckklappe eines Fahrzeuges, umfassend eine Schalteinheit und ein schwenkbares Betätigungselement, welches gegenüber der Schalteinheit aus einer unbetätigten Ruhelage in mindestens zwei Betätigungslagen schwenkbar ist.

Aus der Druckschrift DE 10 2013 013 176 A1 ist eine Vorrichtung zum Öffnen eines Verschlusselementes eines Fahrzeugs bekannt, welche ein schwenkbares Betätigungselement umfasst, welches aus einer Ruhestellung heraus in eine geöffnete Aktivierungsstellung schwenkbar ist. Das Verschlusselement kann beispielsweise eine Heckklappe sein. Die Vorrichtung umfasst ferner eine Schalteinheit. Es ist vorgesehen, dass das Betätigungselement in verschiedene Aktivierungsstellungen schwenkbar ist und die Schalteinheit mehrere Schaltstufen umfasst, wobei den Schaltstufen jeweils eine Aktivierungsstellung des Betätigungselementes zugeordnet sind. Das Betätigungselement wird in jeder der Aktivierungsstellungen in eine andere Winkelstellung geschwenkt. Dabei umfasst die Schalteinheit mehrere Schaltstufen, wobei die Schaltstufen jeweils einer Aktivierungsstellung des schwenkbaren Betätigungselementes entsprechen. Durch die mehreren Schaltstufen sind gemäß der genannten Druckschrift DE 10 2013 013 176 A1 verschiedene Mechanismen aktivierbar, beispielsweise lediglich ein Entriegeln des Verschlusselementes, um es manuell per Hand zu öffnen, oder ein automatisches Öffnen des Verschlusselementes. Verschiedene Aktivierungsstellungen werden somit durch verschiedene Schwenkstellungen des Betätigungselementes erzeugt, wobei das Betätigungselement in jeder Aktivierungsstellung in eine andere Winkelstellung geschwenkt wird.

Ein schwenkbares Betätigungselement mit einer Vorrichtung zum Öffnen eines Verschlusselementes, insbesondere einer Heckklappe in verschiedenen Aktivierungsstellungen ist auch in einem anderen Zusammenhang bekannt. Ein Betätigungsglied des schwenkbaren Betätigungselementes erzeugt an einem Schalter einer Entriegelungseinheit einen Schaltpunkt in Abhängigkeit des Schwenkwinkels des schwenkbaren Betätigungselementes gegenüber einem Gehäuseteil, in dem der Schalter ortsfest angeordnet ist. Das Gehäuseteil und das Betätigungselement bilden im Zusammenbauzustand die Vorrichtung, die beispielsweise als Entriegelungseinheit eines Verschlusselementes, insbesondere der Heckklappe, eingesetzt wird. Als Zusammenbauzustand der Entriegelungseinheit wird die Montage des Gehäuseteiles mit dem bereits in das Gehäuse integrierten Schalter - als erstes Zusammenbauteil - und die Montage des schwenkbaren Betätigungselementes mit dem bereits integrierten Betätigungsglied - als zweites Zusammenbauteil - angesehen. Mit anderen Worten, die beiden Zusammenbauteile bilden die Entriegelungseinheit des Verschlusselementes, insbesondere der Heckklappe, und sind im Zusammenbauzustand in der Heckklappe verbaut.

In der Praxis wird es gewünscht, dass bei verschiedenen Fahrzeugen unterschiedliche Schaltpunkte realisiert werden können, die jedoch nicht, wie bei der bereits erläuterten Druckschrift DE 10 2013 013 176 A1, in Abhängigkeit des Schwenkwinkels des schwenkbaren Betätigungselementes erzeugt werden sollen. Bisher wird bei herkömmlichen Entriegelungseinheiten der Schaltpunkt nicht in Abhängigkeit des Schwenkwinkels des schwenkbaren Betätigungselementes gegenüber dem Gehäuseteil, in dem der Schalter ortsfest angeordnet ist, festgelegt, sondern es werden als zweites Zusammenbauteil unterschiedliche Betätigungselemente eingesetzt, die sich dadurch unterscheiden, dass die Betätigungsglieder an dem Betätigungselement unterschiedliche geometrische Ausgestaltungen aufweisen, wodurch sie gegenüber dem Schalter bei ansonsten unverändertem Verbau des Betätigungselementes in unterschiedlichen Positionen angeordnet sind, wodurch sich bei gleichem Schwenkwinkel der sich durch die Betätigungsglieder unterscheidenden Betätigungselemente gegenüber dem Gehäuseteil an dem in dem Gehäuseteil integrierten Schalter unterschiedliche Schaltpunkte ergeben. Es versteht sich, dass sich durch die unterschiedliche geometrische Ausgestaltung der Betätigungsglieder an einem Betätigungselement auch bei unterschiedlichen Schwenkwinkeln des schwenkbaren Betätigungselementes gegenüber dem Gehäuseteil noch unterschiedliche Schaltpunkte ergeben.

Der Nachteil besteht somit zusammengefasst darin, dass an der Montagelinie für unterschiedliche Fahrzeuge mit gewünschten sich unterscheidenden Schaltpunkten unterschiedliche Betätigungselemente als zweite Zusammenbauteile hergestellt, vorgehalten und verwechselungsfrei dem ersten stets baugleich zum Einsatz kommenden ersten Zusammenbauteil mithin dem Gehäuseteil zugeordnet und verbaut werden müssen.

Die Aufgabe der Erfindung besteht darin, eine Entriegelungseinheit zu schaffen, die variabler einsetzbar ist.

Ausgangspunkt der Erfindung ist eine Entriegelungseinheit zum Entriegeln eines öffenbaren Verschlusselementes eines Fahrzeuges, umfassend ein eine Schalteinheit aufweisendes Gehäuse und ein gegenüber dem Gehäuse schwenkbares Betätigungselement, welches gegenüber der Schalteinheit aus einer unbetätigten Ruhelage in mindestens zwei Betätigungslagen schwenkbar ist.

Es ist erfindungsgemäß vorgesehen, dass die Schalteinheit in dem Gehäuse angeordnet und gegenüber dem Gehäuse reversibel in mindestens zwei unterschiedlichen Schaltpunktlagen anordbar ist, wodurch dem schwenkbaren Betätigungselement der Entriegelungseinheit in Abhängigkeit eines Schaltwinkels des aus der Ruhelage heraus schwenkbaren Betätigungselementes unterschiedliche Auslöse-Schaltpunkte zuordenbar sind.

Das öffenbare Verschlusselement ist beispielsweise eine Heckklappe. Die Entriegelungseinheit ist entweder direkt in der Heckklappe angeordnet oder ist in einem anderen Strukturbauteil eines Fahrzeuges angeordnet und dient der Entriegelung der Heckklappe. Das öffenbare Verschlusselement kann jede Art von Deckel sein, wobei die Entriegelungseinheit in dem Deckel selbst oder in einem anderen Strukturbauteil zur Entriegelung des Deckels angeordnet ist.

Die erfindungsgemäße Lösung hat den Vorteil, dass mittels einer einzigen Schalteinheit durch die unterschiedliche Anordnung der Schalteinheit in einer Entriegelungseinheit unterschiedliche Auslöse-Schaltpunkte realisierbar sind. Die Entriegelungseinheit ist somit variabel einsetzbar, da sie in jedem Fahrzeug verbaubar ist, unabhängig davon, ob fahrzeugseitig unterschiedliche Auslöse-Schaltpunkte gewünscht werden. Der Auslöse-Schaltpunkt kann jederzeit vor oder nach dem Verbrauch der Entriegelungseinheit geändert werden, da mindestens zwei unterschiedliche Schaltpunktlagen einstellbar sind. Bisher wurden für unterschiedliche Fahrzeuge unterschiedliche Entriegelungseinheiten mit sich voneinander unterscheidenden Auslöse-Schaltpunkten eingesetzt, die jetzt durch eine einzige Entriegelungseinheit ersetzt werden, wodurch in vorteilhafter Weise der Bauteilumfang sinkt.

Bevorzugt ist, dass die Schalteinheit der Entriegelungseinheit fest in einem Halteelement integriert angeordnet ist, welches im Zusammenbauzustand der Entriegelungseinheit in dem Gehäuse angeordnet und gegenüber dem Gehäuse reversibel in den mindestens zwei unterschiedlichen Schaltpunktlagen anordbar ist.

Das hat den Vorteil, dass die Schalteinheit geschützt in einem Halteelement angeordnet ist, wobei ferner unterschiedliche Schalteinheiten einsetzbar sind, die durch einfache Anpassung der Aufnahme der Schalteinheit in dem Halteelement zum Einsatz kommen können. Eine Anpassung des Halteelementes gegenüber dem Gehäuse ist somit in Abhängigkeit der unterschiedlichen Schalteinheiten in vorteilhafter Weise nicht notwendig.

Bevorzugt ist ferner, dass das Gehäuse der Entriegelungseinheit eine Aufnahmeöffnung aufweist, welche in dem Zusammenbauzustand der Entriegelungseinheit zumindest von der integrierten Schalteinheit oder von dem Halteelement und der integrierten Schalteinheit durchgriffen wird, so dass die Schalteinheit bei der unbetätigten Ruhelage des schwenkbaren Betätigungselementes in Abhängigkeit der Anordnung der Schalteinheit in einer der mindestens zwei Schaltpunktlagen in einem vorgebbaren Abstand von einem Betätigungsglied des schwenkbaren Betätigungselementes angeordnet ist. Diese Lösung ist hinsichtlich der Justierung der Schalteinheit gegenüber dem Betätigungselement von Vorteil. Es kann eine präzise Justierung in der Schalteinheit in dem Halteelement realisiert werden, indem die Schalteinheit durch die Aufnahmeöffnung gesteckt wird, wonach die Schalteinheit in einer vorgebbaren Position in dem Halteelement verrastet oder verclipst wird, wie in der Beschreibung näher erläutert ist. Das Halteelement seinerseits kann jedenfalls genau innerhalb des Gehäuses positioniert werden, wozu an dem Halteelement entsprechende Führungselemente angeordnet sind, die in beiden der mindestens zwei Schaltpunktlagen in jeweils angeordnete Positioniervertiefungen des Gehäuses eingreifen, wie ebenfalls in der Beschreibung detailliert erläutert ist.

In bevorzugter Ausgestaltung der Erfindung ist einerseits vorgesehen, dass ausgehend von der unbetätigten Ruhelage des schwenkbaren Betätigungselementes in Abhängigkeit der Anordnung der Schalteinheit in einer ersten Schaltpunktlage ein erster Abstand zwischen der Schalteinheit und dem Betätigungsglied einstellbar ist, der bei einer Betätigung des schwenkbaren Betätigungselementes um den ersten Schaltwinkel in eine erste Betätigungslage überwunden ist, wodurch ein erster Auslöse-Schaltpunkt zwischen dem Betätigungsglied und der Schalteinheit bewirkbar ist.

In bevorzugter Ausgestaltung der Erfindung ist andererseits vorgesehen, dass ausgehend von der unbetätigten Ruhelage des schwenkbaren Betätigungselementes in Abhängigkeit der Anordnung der Schalteinheit in einer zweiten Schaltpunktlage ein zweiter Abstand zwischen der Schalteinheit und dem Betätigungsglied einstellbar ist, der bei einer Betätigung des schwenkbaren Betätigungselementes um einen zweiten Schaltwinkel in eine zweite Betätigungslage überwunden ist, wodurch ein zweiter Auslöse-Schaltpunkt zwischen dem Betätigungsglied und der Schalteinheit bewirkbar ist.

Vorgesehen ist bevorzugt, dass das Halteelement mit der integrierten Schalteinheit in der Aufnahmeöffnung des Gehäuses gegenüber dem Gehäuse verschieblich angeordnet ist, wodurch eine vorteilhafte Lösung vorliegt, die mit wenig Aufwand zu realisieren ist und die insbesondere einfach auszuführen ist, da zur Einstellung unterschiedlicher Schaltpunktlagen lediglich eine örtliche Verlagerung des Halteelementes notwendig ist.

Zudem ist bevorzugt vorgesehen, dass das Halteelement und die Schalteinheit ortsfest zueinander als erstes vorgefertigtes Zusammenbauteil und das schwenkbare Betätigungselement und das Betätigungsglied ortsfest zueinander als zweites vorgefertigtes Zusammenbauteil vorliegen, die zu der Entriegelungseinheit zusammenbaubar sind, wobei das Betätigungselement schwenkbar im Gehäuse und das Halteelement verschieblich in der Aufnahmeöffnung des Gehäuses gelagert sind. In vorteilhafter Weise wird dadurch erreicht, dass ein Werker an der Montagelinie lediglich die vorgefertigten Zusammenbauteile zu der Entriegelungseinheit zusammenfügen muss.

Außerdem ist erfindungsgemäß bevorzugt vorgesehen, dass das Gehäuse zumindest im Bereich des angeordneten Halteelementes einen kreisbogenförmigen Abschnitt aufweist, so dass das in dem Gehäuse angeordnete Halteelement mit der integrierten Schalteinheit gegenüber dem Gehäuse auf einem Kreisbogen verschieblich angeordnet ist, wobei ein Radius des Kreisbogens radial zu einer Schwenkachse des gegenüber dem Gehäuse schwenkbaren Betätigungselementes angeordnet ist. Dadurch wird in vorteilhafter Weise erreicht, dass der Abstand einer Schaltfläche des Betätigungsgliedes des Betätigungselementes in seiner Ruhelage gegenüber einem Schaltelement der Schalteinheit in Abhängigkeit des Verschiebeweges des Halteelementes mit der integrierten Schalteinheit bei einem geringen Verschiebeweg zu einer relativ großen Abstandsänderung gegenüber der Schaltfläche des Betätigungsgliedes des Betätigungselementes kommt, da eine Bewegung des Halteelementes auf dem Kreisbogen geometrisch eine schnellere Annäherung des Schaltelementes der integrierten Schalteinheit gegenüber der Schaltfläche des Betätigungsgliedes des Betätigungselementes hervorruft.

Ein Ausführungsbeispiel der Erfindung wird nachfolgend anhand der zugehörigen Zeichnungen erläutert. Es zeigen:
- Figur 1A: eine Schnittdarstellung einer erfindungsgemäßen Entriegelungseinheit, wobei eine Schalteinheit der Entriegelungseinheit gegenüber einem Betätigungselement der Entriegelungseinheit in einer frühen Schaltpunktlage angeordnet und ein Betätigungselement in einer Ruhelage angeordnet ist;
- Figur 1B: eine Schnittdarstellung der Entriegelungseinheit gemäß Figur 1A, wobei die Schalteinheit gegenüber dem Betätigungselement der Entriegelungseinheit in der frühen Schaltpunktlage angeordnet und das Betätigungselement in einer ersten Betätigungslage angeordnet ist;
- Figur 2A: eine Schnittdarstellung der erfindungsgemäßen Entriegelungseinheit, wobei die Schalteinheit der Entriegelungseinheit gegenüber dem Betätigungselement der Entriegelungseinheit in einer späten Schaltpunktlage angeordnet und das Betätigungselement in der Ruhelage angeordnet ist;
- Figur 2B: eine Schnittdarstellung der Entriegelungseinheit gemäß Figur 2A, wobei die Schalteinheit gegenüber dem Betätigungselement in der späten Schaltpunktlage angeordnet und das Betätigungselement in einer zweiten Betätigungslage angeordnet ist;
- Figur 3: eine perspektivische Darstellung der Entriegelungseinheit seitlich schräg von unten mit einer Blickrichtung von dem nicht dargestellten Betätigungselement in Richtung eines Gehäuses der Entriegelungseinheit;
- Figur 4: eine perspektivische Darstellung der Entriegelungseinheit seitlich auf ein Betätigungsglied eines Betätigungselementes im Wesentlichen in Längsrichtung einer Schwenkachse des Betätigungselementes;
- Figur 5: eine Draufsicht auf ein Detail der Entriegelungseinheit zur Verdeutlichung der Positionierung der Schalteinheit in der jeweiligen Schaltpunktlage;
- Figur 6: eine perspektivische Darstellung auf ein Detail der Entriegelungseinheit zur Verdeutlichung der Positionierung der Schalteinheit in der jeweiligen Schaltpunktlage.

Die Erfindung wird nachfolgend anhand der zugehörigen Zeichnungen erläutert. Für die Zwecke der vorliegenden Beschreibung soll mit "-x" ("minus x") die übliche Fahrtrichtung eines Fahrzeuges bezeichnet werden, mit "+x" ("plus x") die Richtung entgegen seiner üblichen Fahrtrichtung, mit "y" wird die Richtung in der Horizontalen quer zur x-Richtung bezeichnet und mit "z" wird die Richtung in der Vertikalen quer zur x-Richtung bezeichnet. Diese Bezeichnungsweise der Raumrichtungen in kartesischen Koordinaten entspricht dem in der Kraftfahrzeugindustrie allgemein verwendeten Koordinatensystem. Innerhalb aller Figuren werden nachfolgend die gleichen Bezugszeichen für gleiche Bauteile verwendet, wobei gegebenenfalls nicht in jeder Figur erneut alle bereits vorgestellten Bauteile anhand der Bezugszeichen nochmals erläutert werden.

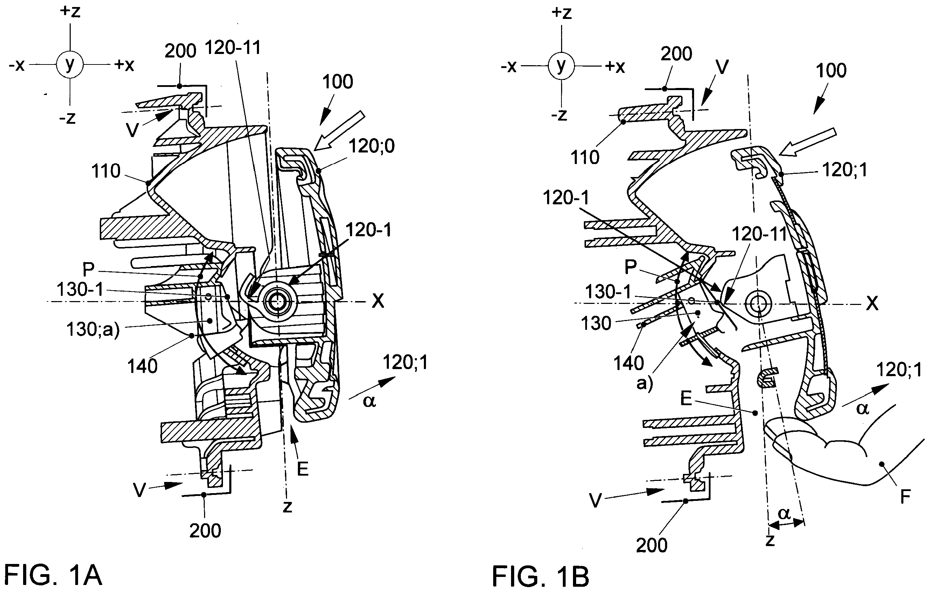

Es wird empfohlen, die Figuren 1A bis 2B sowie 3 in Bezug auf die nachfolgende Vorstellung der erfindungswesentlichen Bauteile in einer Zusammenschau zu betrachten.

Die Figuren zeigen eine Entriegelungseinheit 100, die in einem in den Figuren 1A bis 2B nur andeutungsweise dargestellten Strukturelement 200 angeordnet ist.

Das Strukturelement ist beispielsweise eine Heckklappe. Die Entriegelungseinheit 100 ist beispielsweise eine Heckklappen-Entriegelungseinheit.

Die Entriegelungseinheit 100 umfasst ein Gehäuse 110, welches mit dem Strukturelement 200 in fester Verbindung V steht. In dem Gehäuse 110 ist ein schwenkbares Betätigungselement 120 angeordnet, welches gegenüber dem Gehäuse 110 um eine Y-Achse schwenkbar ist, wodurch das Betätigungselement 120 gegenüber dem Strukturelement 200 verlagerbar ist. Zwischen dem Gehäuse 110 und einem unteren Ende des Betätigungselementes 120, welches auch als Griffklappe bezeichnet wird, ist in einer nicht betätigten Ruhelage 0 des Betätigungselementes 120 ein Eingriffsspalt E vorgesehen. Ein Benutzer der Entriegelungseinheit 100 kann mit seinen Fingern F in den Eingriffsspalt E eingreifen und das Betätigungselement 120 betätigen, insbesondere um die Schwenkachse Y in eine von mehreren Betätigungslagen 1, 2 schwenken, worauf noch detailliert eingegangen wird.

Das Betätigungselement 120 weist ein Betätigungsglied 120-1 auf, welches eine Außenkontur aufweist, wobei eine Teilfläche der Außenkontur eine Schaltfläche 120-11 bildet, die in der jeweiligen Betätigungslage 1, 2 der mehreren Betätigungslagen auf mindestens einen Schalter einer Schalteinheit 130 auftrifft. Das Betätigungsglied 120-1 des Betätigungselementes 120 ist im Ausführungsbeispiel ein Schaltnocken.

Das Betätigungselement 120 mit dem bereits integrierten Betätigungsglied 120-1 wird als zweites Zusammenbauteil vorgefertigt bereitgestellt und in dem Gehäuse 110 schwenkbar montiert. Mit anderen Worten, die Position des integrierten Betätigungsgliedes 120-1, insbesondere des Schaltnockens gegenüber der Griffklappe des Betätigungselement 120 ist nach dem Zusammenbau des zweiten Zusammenbauteiles nicht mehr veränderbar.

Der Schaltnocken ist im Wesentlichen auf einer Längsmittelachse X des Betätigungselementes 120 angeordnet, wobei die Längsmittelachse X die Schwenkachse Y des Betätigungselementes 120 schneidet, die orthogonal zu der Längsmittelachse X verläuft.

In Verlängerung der Längsmittelachse X des Betätigungselementes 120 ist das Gehäuse 110 angeordnet, so dass die Längsmittelachse X des Betätigungselementes 120 im Wesentlichen auch die Längsmittelachse X des Gehäuses 110 ist.

Im Wesentlichen auf der Längsmittelachse X des Gehäuses 110 ist in dem Gehäuse 110 eine Gehäuseöffnung ausgeführt, die im Zusammenbauzustand von dem Schalter 130 durchgriffen wird.

Der Schalter der Schalteinheit 130 ist im Zusammenbauzustand lagefest in einem Halteelement 140 angeordnet, insbesondere verclipst. Halteelement 140 und Schalteinheit bilden nach dem Zusammenbau ein erstes Zusammenbauteil, wobei die Lage der Schalteinheit 130 gegenüber dem Halteelement 140 nach dem Zusammenbau nicht mehr veränderbar ist.

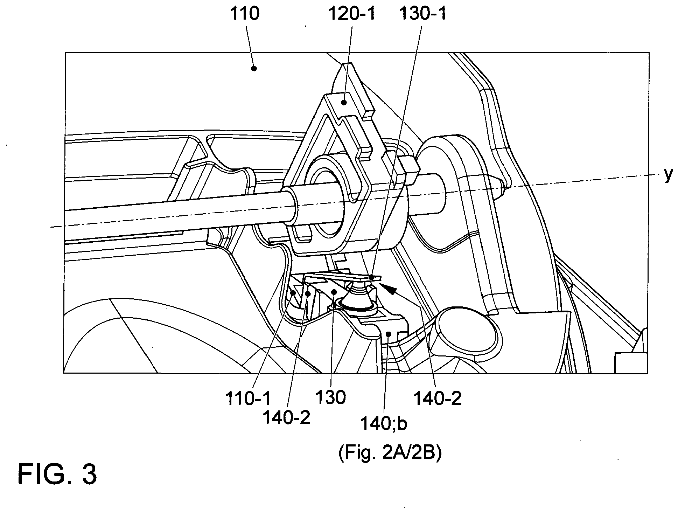

Das Halteelement 140 seinerseits weist kulissenartige Führungselemente 140-1 (vergleiche Figuren 3 bis 5) auf, die in einer Aufnahmeöffnung 110-1 (vergleiche Figuren 3 bis 5) ähnlich einer Kulisse des Gehäuses 110 geführt sind, so dass das Halteelement 140 gegenüber dem Gehäuse 110 verlagerbar ist. Somit ist auch der Schalter der Schalteinheit 130 gegenüber dem Gehäuse 110 verlagerbar.

Der Doppelpfeil P in den Figuren 1A bis 2B bezieht sich somit auf die Verschiebbarkeit des Halteelementes 140 mit dem integrierten Schalter der Schalteinheit 130.

Das Gehäuse 110 weist dabei im Bereich des Halteelementes 140 eine halbkreisförmige Innenkontur auf, wobei das Halteelement 140 korrespondierend zu der halbkreisförmigen Innenkontur des Halteelementes 140 eine halbkreisförmige Außenkontur aufweist, so dass das Halteelement 140 und damit der integrierte Schalter der Schalteinheit 130 auf einer Kreisbahn in +/-z-Richtung in den Figuren 1A bis 2B nach oben oder nach unten bewegbar ist.

Das Halteelement 140 mit dem bereits integrierten Schalter der Schalteinheit 130 wird als erstes Zusammenbauteil vorgefertigt und in dem Gehäuse 110 entlang des Doppelpfeiles P reversibel verschiebbar montiert.

Mit anderen Worten, die Position des Halteelementes 140 mit dem integrierten Schalter der Schalteinheit 130 ist nach dem Zusammenbau der Entriegelungseinheit 100 gegenüber dem Gehäuse 110 und somit gegenüber dem Schaltnocken des Betätigungselementes 120 veränderbar.

Es wird deutlich, dass der Schalter der Schalteinheit 130 bei einem sich in der unbetätigten Ruhelage 0 angeordneten Betätigungselement 120 in einer ersten Schaltpunktlage a) - siehe Figur 1A - nahe der Schaltfläche 120-11 der Außenkontur des Schaltnockens 120-1 angeordnet ist.

Mit anderen Worten, ein erster Abstand zwischen dem aktiven Schaltelement 130-1 des Schalters der Schalteinheit 130 und der Außenkontur des Schaltnockens 120-1 ist gering. In der ersten Schaltpunktlage a) des Schalters der Schalteinheit 130 bildet das Halteelement 140 gegenüber dem Gehäuse 110 mindestens einen Anschlag aus, so dass die Verschiebung des Halteelementes 140 entlang der Kreisbahn gemäß dem Doppelpfeil P solange in +z-Richtung (in den Figuren 1A, 1B nach oben) erfolgt, bis das Halteelement 140 an dem den oberen Anschlag bildenden Gehäuseteil des Gehäuses 110 anschlägt, wodurch der erste Auslöse-Schaltpunkt präzise und fehlerfrei einstellbar ist.

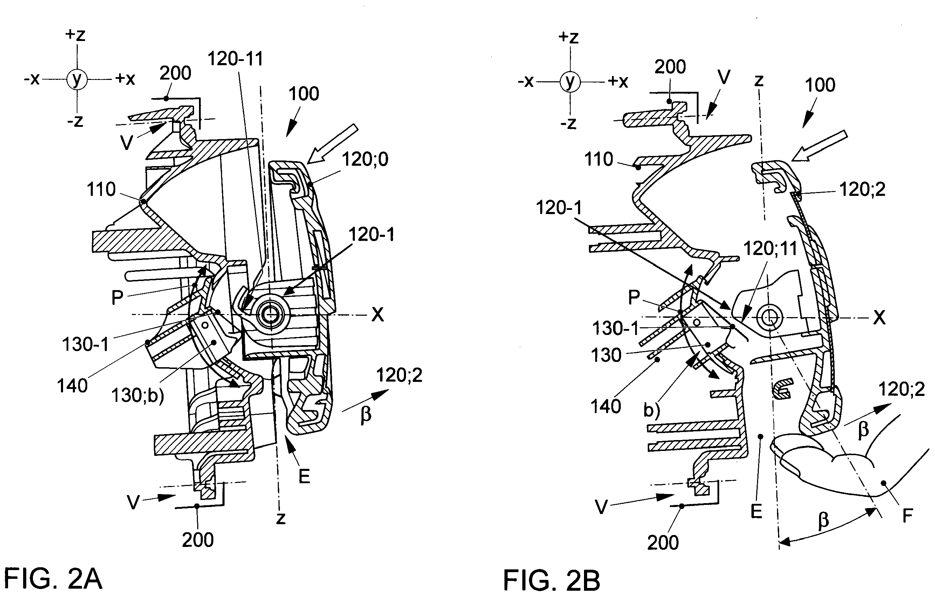

Durch Vergleich der Figur 1A mit der Figur 2A wird deutlich, dass der Schalter der Schalteinheit 130 gemäß der Figur 2A bei einem sich in der unbetätigten Ruhelage 0 angeordneten Betätigungselement 120 in einer zweiten Schaltpunktlage b) weiter von der Schaltfläche 120-11 der Außenkontur des Schaltnockens 120-1 entfernt angeordnet ist.

Mit anderen Worten, ein zweiter Abstand zwischen dem aktiven Schaltelement 130-1 des Schalters der Schalteinheit 130 und der Außenkontur des Schaltnockens 120-1 ist größer als der erste Abstand, bei dem sich der Schalter der Schalteinheit 130 in der ersten Schaltpunktlage a) befindet.

In der zweiten Schaltpunktlage b) des Schalters der Schalteinheit 130 bildet das Halteelement 140 gegenüber dem Gehäuse 110 ebenfalls mindestens einen Anschlag aus, so dass die Verschiebung des Halteelementes 140 entlang der Kreisbahn gemäß dem Doppelpfeil P solange in -z-Richtung (in den Figuren 2A, 2B nach unten) erfolgt, bis das Halteelement 140 an dem den unteren Anschlag bildenden Gehäuseteil des Gehäuses 110 anschlägt, wodurch der zweite Auslöse-Schaltpunkt präzise und fehlerfrei einstellbar ist.

Das aktive Schaltelement 130-1 des Schalters der Schalteinheit 130 ist beispielsweise eine metallische Schaltfahne eines Micro-Schalters.

Aus der beschriebenen Ausgestaltung der Entriegelungseinheit 100 ergibt sich folgende Funktion:
Je nachdem, ob sich der Schalter der Schalteinheit 130 in der ersten Schaltpunktlage a), vergleiche Figuren 1A, 1B, oder der zweiten Schaltpunktlage b), vergleiche Figuren 2A, 2B, befindet, wird ein Auslöse-Schaltpunkt früher oder später erreicht.

Gemäß der Figur 1A ist der erste Abstand zwischen dem aktiven Schaltelement 130-1 des Schalters der Schalteinheit 130 und der Außenkontur des Schaltnockens 120-1 gering, so dass durch die Betätigung des Betätigungselementes 120 über den Eingriff der Finger F eines Benutzers in den Eingriffsspalt E (vergleiche Figur 1B) bereits nach Einstellung eines ersten Schwenkwinkels a des Betätigungselementes 120 um die Schwenkachse Y ein Kontakt zwischen der Schaltfläche 120-11 der Außenkontur des Schaltnockens 120-1 und dem aktiven Schaltelement 130-1 des Schalters der Schalteinheit 130 erfolgt.

Ausgehend von der ersten Schaltpunktlage a) des Schalters beträgt der erste Schaltwinkel a = 10°. Das Betätigungselement 120 befindet sich gemäß der Figur 1B von der unbetätigten Ruhelage 0 ausgehend nach der vollzogenen Betätigung des Betätigungselementes 120 um a = 10° in einer ersten Betätigungslage 1.

Grundsätzlich kann eine Betätigung auch erfolgen, indem der Benutzer nicht in den Eingriffsspalt E eingreift, sondern im oberen Bereich des Betätigungselementes 120 von außen auf das Betätigungselement 120 drückt, wie durch den Pfeil verdeutlicht wird, jedoch muss dann eine relativ hohe Bediendruckkraft ausgeübt werden, so dass eine Bedienzugkraft durch den Benutzer durch Eingriff in den Eingriffsspalt E als angenehmer empfunden wird.

Dadurch können Entriegelungseinheiten 100 realisiert werden, die einen frühen Auslöse-Schaltpunkt aufweisen sollen. Dieser frühe Auslöse-Schaltpunkt bezieht sich auf eine komfortable Bedienung, bei der bereits durch eine geringe Betätigungsbewegung eines Betätigungselementes 120 ein Schaltpunkt erreicht ist. In Abhängigkeit des erreichten frühen Auslöse-Schaltpunktes können nach Wunsch entsprechende Betätigungen initiiert und ausgeführt werden. Beispielsweise kann ein Entriegelungsmechanismus einer Heckklappe ausgelöst werden, so dass sich die Heckklappe manuell oder selbsttätig öffnet.

Gemäß der Figur 2A ist der zweite Abstand zwischen dem aktiven Schaltelement 130-1 des Schalters der Schalteinheit 130 und der Außenkontur des Schaltnockens 120-1 größer als der erste Abstand, so dass durch die Betätigung des Betätigungselementes 120 über den Eingriff der Finger F eines Benutzers in den Eingriffsspalt E (vergleiche Figur 2B) erst nach Einstellung eines zweiten Schwenkwinkels β des Betätigungselementes 120 um die Schwenkachse Y ein Kontakt zwischen der Schaltfläche 120-11 der Außenkontur des Schaltnockens 120-1 und dem aktiven Schaltelement 130-1 des Schalters der Schalteinheit 130 erfolgt.

Ausgehend von der zweiten Schaltpunktlage b) des Schalters beträgt der zweite Schaltwinkel β = 27,5°. Das Betätigungselement 120 befindet sich gemäß der Figur 2B von der unbetätigten Ruhelage 0 ausgehend nach der vollzogenen Betätigung des Betätigungselementes um β = 27,5° in einer zweiten Betätigungslage 2.

Dadurch können Entriegelungseinheiten 100 realisiert werden, die einen späten Auslöse-Schaltpunkt aufweisen sollen. Ein späterer Auslöse-Schaltpunkt ist insbesondere bei Fahrzeugen von Vorteil, die keinen von dem Fahrgastraum getrennten Kofferraum besitzen. Im Crashfall wird damit sichergestellt, dass eine durch den Crash hervorgerufene Schwenkbewegung des Betätigungselementes 120 um die Schwenkachse Y erst spät beziehungsweise später, das heißt erst bei einem großen beziehungsweise einem gegenüber dem ersten Schaltwinkel α größeren zweiten Schaltwinkel β, erfolgt. Über den erreichten späten Auslöse-Schaltpunkt können analog zu dem früheren Auslöse-Schaltpunkt nach Wunsch entsprechende Betätigungen ausgeführt werden. Beispielsweise kann ein Entriegelungsmechanismus einer Heckklappe später, das heißt erst nach Erreichen des späten Auslöse-Schaltpunktes, ausgelöst werden, so dass sich die Heckklappe manuell oder selbsttätig öffnet.

Es versteht sich, dass die Einstellung der Auslöse-Schaltpunkte innerhalb des Verstellbereiches des Halteelementes 140 gegenüber dem Gehäuse 110 zwischen den erläuterten Anschlägen variabel ist und die Winkelangaben α, β der Schaltwinkel beispielhaft sind.

Die Figur 3 zeigt ergänzend weitere technische Details in einer perspektivischen Darstellung der Entriegelungseinheit 100 seitlich schräg von unten mit einer Blickrichtung von dem in Figur 3 nicht dargestellten Betätigungselement 120 in Richtung des Gehäuses 110 der Entriegelungseinheit 100.

Das Halteelement 140 mit der integrierten Schalteinheit 130 ist durch die Aufnahmeöffnung 110-1 des Gehäuses 110 gesteckt. Sichtbar ist das zu dem Schaltnocken 120-1 gerichtete aktive Schaltelement 130-1, welches im Ausführungsbeispiel die metallische Schaltfahne des Micro-Schalters ist. Ferner sind die Rastelemente 140-2 des Halteelementes 140 dargestellt, mittels denen der Schalter der Schalteinheit 130 im Zusammenbauzustand lagefest mit dem Halteelement 140 verrastet/verclipst ist.

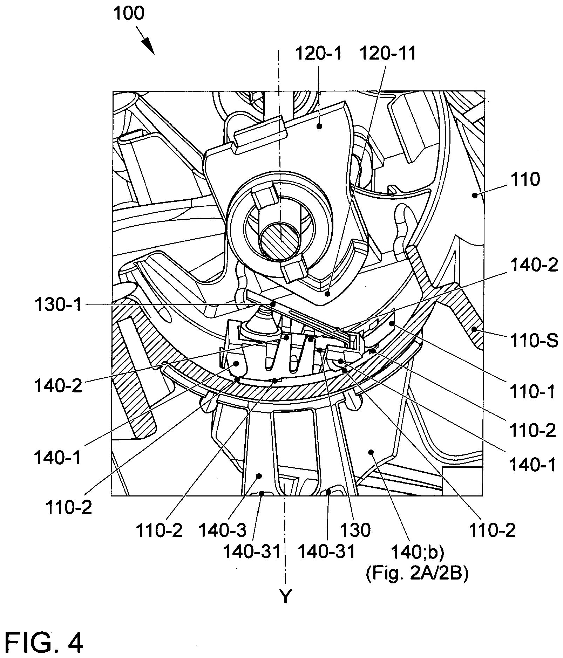

Die Figur 4 zeigt eine perspektivische Darstellung der Entriegelungseinheit 100 seitlich auf das Betätigungsglied 120-1 des Betätigungselementes 120 im Wesentlichen in Längsrichtung der Schwenkachse Y des Betätigungselementes 120. Das Gehäuse 110 ist geschnitten dargestellt, wobei eine Schnittfläche des Gehäuses 110 in Figur 3 mit dem Bezugszeichen 110-S gekennzeichnet ist. Das Halteelement 140 ist in Figur 3 analog zu den Figuren 2A und 2B wiederum in der zweiten Schaltpunktlage b) angeordnet.

In dieser Darstellung wird deutlich, dass das Halteelement 140 ferner neben den Rastelementen 140-2 die seitlichen Führungselemente 140-1 umfasst, wobei jeweils seitlich mindestens zwei Führungselemente 140-1 angeordnet sind. Die seitlichen Führungselemente 140-1 führen das Halteelement 140 entlang des Randes der kreisbogenförmig ausgestalteten Aufnahmeöffnung 110-1. Die seitlichen Führungselemente 140-1 übergreifen den Rand im Zusammenbauzustand, wobei die Aufnahmeöffnung 110-1 des Gehäuses 110 einen Einsteckbereich aufweist, in den das Halteelement 140 mit seinen seitlichen Führungselementen 140-1 einsteckbar und anschließend positionierbar ist, so dass die seitlichen Führungselemente 140-1 den Rand der Aufnahmeöffnung 110-1 übergreifen. Die seitlichen Führungselemente 140-1 weisen dabei gehäuseseitig einends Konturen auf, die in hinsichtlich der Kontur korrespondierende Positioniervertiefungen 110-2 eingreifen, die im Rand der Aufnahmeöffnung 110-1 des Gehäuses 110 angeordnet sind.

In der dargestellten zweiten Schaltpunktlage b) des Halteelementes 140 greifen jeweils zwei seitlich angeordnete Führungselemente 140-1 in jeweils zwei Positioniervertiefungen 110-2 ein, wobei auf der nicht sichtbaren Rückseite des Halteelementes 140 eine analoge Ausgestaltung vorliegt. Diese Vorkehrungen haben den Vorteil, dass die Position in der zweiten Schaltpunktlage b) gesichert ist und ein Werker die richtige Position durch eine Art Einrastbewegung des Halteelementes 140 gegenüber dem Gehäuse 110 wahrnimmt. Bei einer Verschiebung von der dargestellten zweiten Schaltpunktlage b) in die erste Schaltpunktlage a) in Figur 4 nach rechts führt bei dem Werker somit zuerst zu einer wahrnehmbaren Ausrastbewegung des Halteelementes 140, welches nach der durchgeführten Verschiebebewegung des Halteelementes 140 zu einer Einrastbewegung in den anderen vorgesehenen Positioniervertiefungen 110-2 führt.

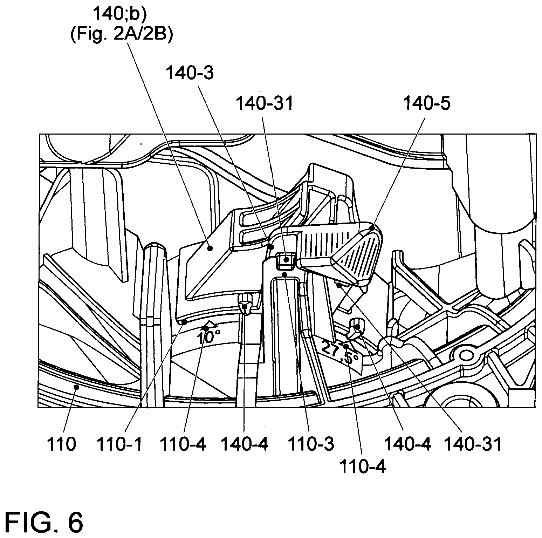

Die Figur 4 zeigt noch am unteren Rand der Darstellung Sicherungselemente 140-31, die von der in radialer Richtung bezüglich der Y-Schwenkachse gesehen abgehenden Platte 140-3 des Halteelementes 140 angeordnet sind. Die Sicherungselemente 140-31 erstrecken sich in y-Richtung und greifen je nach Schaltpunktlage a) oder b) in eine Sicherungsaufnahme 110-3 (vergleiche Figur 6) ein, die in dem Gehäuse 110 ausgebildet ist, worauf im Zusammenhang mit der Beschreibung der Figur 6 noch eingegangen wird. Eines der Sicherungselemente 140-31 sichert in vorteilhafter Weise durch Eingriff in der Sicherungsaufnahme 110-3 stets in der jeweiligen Schaltpunktlage a) oder b) die Position des Halteelementes 140 gegenüber dem Gehäuse 110, so dass es nicht durch eine ungewollte Verlagerung des Halteelementes 140 gegenüber dem Gehäuse 110 zu einer Veränderung des gewünschten Auslöse-Schaltpunktes kommt.

Die Figur 4 zeigt ferner Positioniernasen 140-4. Die Positioniernasen 140-4 zeigen dem Werker die Schaltpunktlage a) oder b) an, da auf dem Rand der Aufnahmeöffnung 110-1 des Gehäuses 110 eine entsprechende Winkelangabe des jeweiligen Schaltwinkels α oder β mit einem Positionierpfeil 110-4 (vergleiche Figur 6) vermerkt ist. In Figur 6 zeigt die Positioniernase 140-4 auf den Positionierpfeil 110-4, an dem der Schaltwinkel β (beispielsweise 27,5°) gemäß der Schaltpunktlage b) mit einem späten Auslöse-Schaltpunkt angetragen ist.

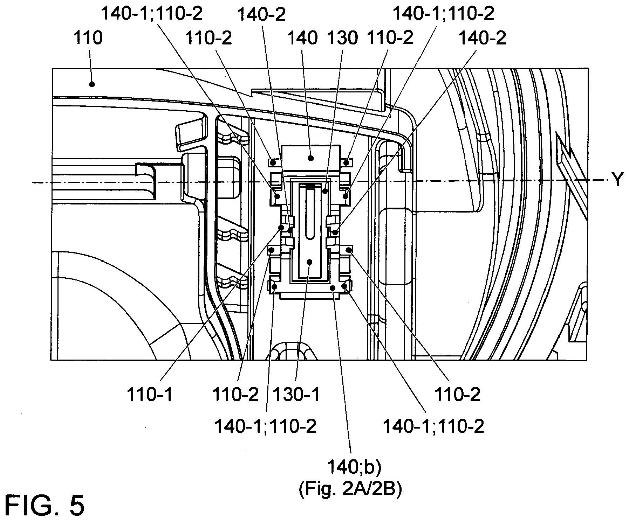

Die Figur 5 zeigt in einer Draufsicht auf das Halteelement 140 im Wesentlichen noch einmal die Vorkehrungen, die in der Beschreibung zu der Figur 4 mit einer seitlichen Blickrichtung auf das Halteelement 140 bereits beschrieben sind. In Figur 5 blickt der Betrachter bezüglich der Y-Schwenkachse radial auf das Halteelement 140 und die intergierte Schalteinheit 130 und das aktive Schaltelement 130-1.

Die Figur 6 verdeutlicht in einer weiteren perspektivischen Darstellung, wie der Werker die Positionierung der Schalteinheit 130 in der jeweiligen Schaltpunktlage a) oder b) vornimmt. Auf die Positioniernasen 140-4 und die Positionierpfeile 110-4 wurde bereits eingegangen, vergleiche Figur 4 und zugehörige Beschreibung. Das Halteelement 140 ist in Figur 6 analog zu den Figuren 2A und 2B wiederum in der zweiten Schaltpunktlage b) mit dem Schaltwinkel β (beispielsweise β = 27,5) angeordnet.

Das an der Platte 140-3 angeordnete Sicherungselement 140-31 greift in der verrasteten Stellung in die Sicherungsaufnahme 110-3 ein und sichert das Halteelement 140 und damit die Schalteinheit 130 gegen eine Verlagerung entlang der Aufnahmeöffnung 110-1 in Längsrichtung der Aufnahmeöffnung 110-1 gesehen. Eine Verstellung von der zweiten Schaltpunktlage b) mit dem Schaltwinkel β zu der ersten Schaltpunktlage a) mit dem Schaltwinkel α erfolgt durch ein Druckbetätigung des Werkers an einer Betätigungsfläche eines Sicherungshebels 140-5 des Halteelementes 140. Der Sicherungshebel 140-5 ist Teil der Platte 140-3 und eine Bewegung des Sicherungshebels 140-5 von der Sicherungsaufnahme 110-3 weg in die Blattebene hinein führt zu einem Ausklinken des Sicherungselementes 140-31 aus der Sicherungsaufnahme 110-3. Der Werker verschiebt anschließend vorzugsweise mit Hilfe des Sicherungshebels 140-5 das Halteelement 140 in die erste Schaltpunktlage a) mit dem Schaltwinkel a, in der das andere Sicherungselement 140-31 in die ortsfeste Sicherungsaufnahme 110-3 eingreift, so dass das Halteelement 140 wieder gesichert ist.

Abschließend wird darauf hingewiesen, dass gemäß der Beschreibung zwei Schaltpunktlagen a) und b) ausgebildet sind, wodurch sich zwei Auslöse-Schaltpunkte ergeben. Es versteht sich, dass gemäß der Erfindung mehr als zwei Schaltpunktlagen und Auslöse-Schaltpunkte realisierbar sind, da das Halteelement 140 und damit die Schalteinheit 130 innerhalb der gehäuseseitigen Aufnahmeöffnung 110-1 jede beliebige Stellung einnehmen kann.

### Bezugszeichenliste

- 100: Entriegelungseinheit
- 110: Gehäuse
- 110-S: Schnittfläche
- 110-1: Aufnahmeöffnung
- 110-2: Positioniervertiefungen
- 110-3: Sicherungsaufnahme
- 110-4: Positionierpfeil
- 120: Betätigungselement
- 120-1: Betätigungsglied (Schaltnocken)
- 120-11: Schaltfläche
- 130: Schalteinheit
- 130-1: Schaltelement
- 140: Halteelement
- 140-1: Führungselemente
- 140-2: Rastelemente
- 140-3: Platte
- 140-31: Sicherungselemente
- 140-4: Positioniernase
- 140-5: Sicherungshebel
- 200: Strukturelement
- E: Eingriffsspalt
- F: Finger
- V: Verbindung
- 0: Ruhelage des Betätigungselementes
- 1: erste Betätigungslage
- 2: zweite Betätigungslage
- a): erste Schaltpunktlage
- α: erster Schaltwinkel
- b): zweite Schaltpunktlage
- β: zweiter Schaltwinkel
- P: Doppelpfeil
- -x: Richtung in der üblichen Fahrtrichtung eines Fahrzeugs
- +x: Richtung entgegen der üblichen Fahrtrichtung -x
- X: Längsmittelachse des Betätigungselementes und des Gehäuses
- y: Richtung in der Horizontalen quer zur x-Richtung
- Y: Schwenkachse des Betätigungselementes
- +z: Richtung in der Vertikalen nach oben quer zur x-Richtung
- -z: Richtung in der Vertikalen nach unten quer zur x-Richtung

## Patentansprüche

1. Entriegelungseinheit (100) zum Entriegeln eines öffenbaren Verschlusselementes eines Fahrzeuges, umfassend ein eine Schalteinheit (130) aufweisendes Gehäuse (110) und ein gegenüber dem Gehäuse (110) schwenkbares Betätigungselement (120), welches gegenüber der Schalteinheit (130) aus einer unbetätigten Ruhelage (0) in mindestens zwei Betätigungslagen (1, 2) schwenkbar ist, **dadurch gekennzeichnet, dass** die Schalteinheit (130) in dem Gehäuse (110) angeordnet und gegenüber dem Gehäuse (110) reversibel in mindestens zwei unterschiedlichen Schaltpunktlagen (a), b)) anordbar ist, wodurch dem schwenkbaren Betätigungselement (120) der Entriegelungseinheit (100) in Abhängigkeit eines Schaltwinkels (α, β) des aus der Ruhelage (0) heraus schwenkbaren Betätigungselementes (120) unterschiedliche Auslöse-Schaltpunkte zuordenbar sind.

2. Entriegelungseinheit (100) nach Anspruch 1, **dadurch gekennzeichnet, dass** die Schalteinheit (130) fest in einem Halteelement (140) integriert angeordnet ist, welches im Zusammenbauzustand der Entriegelungseinheit (100) in dem Gehäuse (110) angeordnet und gegenüber dem Gehäuse (110) reversibel in den mindestens zwei unterschiedlichen Schaltpunktlagen (a), b)) anordbar ist.

3. Entriegelungseinheit (100) nach Anspruch 2, **dadurch gekennzeichnet, dass** das Gehäuse (110) eine Aufnahmeöffnung (110-1) aufweist, welche in dem Zusammenbauzustand der Entriegelungseinheit (100) zumindest von der integrierten Schalteinheit (130) oder von dem Halteelement (140) und der integrierten Schalteinheit (130) durchgriffen wird, so dass die Schalteinheit (130) bei der unbetätigten Ruhelage (0) des schwenkbaren Betätigungselementes (120) in Abhängigkeit der Anordnung der Schalteinheit (130) in einer der mindestens zwei Schaltpunktlagen (a), b)) in einem vorgebbaren Abstand von einem Betätigungsglied (120-1) des schwenkbaren Betätigungselementes (120) angeordnet ist.

4. Entriegelungseinheit (100) nach Anspruch 3, **dadurch gekennzeichnet, dass** ausgehend von der unbetätigten Ruhelage (0) des schwenkbaren Betätigungselementes (120) in Abhängigkeit der Anordnung der Schalteinheit (130) in einer ersten Schaltpunktlage (a)) ein erster Abstand zwischen der Schalteinheit (130) und dem Betätigungsglied (120-1) einstellbar ist, der bei einer Betätigung des schwenkbaren Betätigungselementes (120) um den ersten Schaltwinkel (α) in eine erste Betätigungslage (1) überwunden ist, wodurch ein erster Auslöse-Schaltpunkt zwischen dem Betätigungsglied (120-1) und der Schalteinheit (130) bewirkbar ist.

5. Entriegelungseinheit (100) nach Anspruch 3, **dadurch gekennzeichnet, dass** ausgehend von der unbetätigten Ruhelage (0) des schwenkbaren Betätigungselementes (120) in Abhängigkeit der Anordnung der Schalteinheit (130) in einer zweiten Schaltpunktlage (b)) ein zweiter Abstand zwischen der Schalteinheit (130) und dem Betätigungsglied (120-1) einstellbar ist, der bei einer Betätigung des schwenkbaren Betätigungselementes (120) um einen zweiten Schaltwinkel (β) in eine zweite Betätigungslage (2) überwunden ist, wodurch ein zweiter Auslöse-Schaltpunkt zwischen dem Betätigungsglied (120-1) und der Schalteinheit (130) bewirkbar ist.

6. Entriegelungseinheit (100) nach Anspruch 3, **dadurch gekennzeichnet, dass** das Halteelement (140) mit der integrierten Schalteinheit (130) in der Aufnahmeöffnung (110-1) des Gehäuses (110) gegenüber dem Gehäuse (110) verschieblich angeordnet ist.

7. Entriegelungseinheit (100) nach Anspruch 3, **dadurch gekennzeichnet, dass** das Halteelement (140) und die Schalteinheit (130) ortsfest zueinander als erstes vorgefertigtes Zusammenbauteil und das schwenkbare Betätigungselement (120) und das Betätigungsglied (120-1) ortsfest zueinander als zweites vorgefertigtes Zusammenbauteil vorliegen, die zu der Entriegelungseinheit (100) zusammenbaubar sind, wobei das Betätigungselement (120) schwenkbar im Gehäuse (110) und das Halteelement (140) verschieblich in der Aufnahmeöffnung (110-1) des Gehäuses (110) gelagert sind.

8. Entriegelungseinheit (100) nach Anspruch 7, **dadurch gekennzeichnet, dass** das Gehäuse (100) zumindest im Bereich des angeordneten Halteelementes (140) einen kreisbogenförmigen Abschnitt aufweist, so dass das in dem Gehäuse (110) angeordnete Halteelement (140) mit der integrierten Schalteinheit (130) gegenüber dem Gehäuse (120) auf einem Kreisbogen verschieblich angeordnet ist, wobei ein Radius des Kreisbogens radial zu einer Schwenkachse (Y) des gegenüber dem Gehäuse (100) schwenkbaren Betätigungselementes (120) angeordnet ist.

9. Fahrzeug aufweisend mindestens ein Strukturbauteil (200), in dem eine Entriegelungseinheit (100) nach mindestens einem der Ansprüche 1 bis 8 angeordnet ist.

10. Fahrzeug nach Anspruch 9, **dadurch gekennzeichnet, dass** das Strukturbauteil (200) ein öffenbares Verschlusselement, insbesondere eine Heckklappe des Fahrzeuges ist.

## Claims

1. Unlocking unit (100) for unlocking an openable closure element of a vehicle, comprising a housing (110), which has a switching unit (130), and an actuating element (120) which can be pivoted with respect to the housing (110) and can be pivoted with respect to the switching unit (130) out of a non-actuated rest position (0) into at least two actuating positions (1, 2), **characterized in that** the switching unit (130) is arranged in the housing (110) and can be arranged reversibly in at least two different switching point positions (a), b)) with respect to the housing (110), as a result of which the pivotable actuating element (120) of the unlocking unit (100) can be assigned different triggering switching points in a manner which is dependent on a switching angle (α, β) of the actuating element (120) which can be pivoted out of the rest position (0).

2. Unlocking unit (100) according to Claim 1, **characterized in that** the switching unit (130) is arranged in a manner which is integrated fixedly in a holding element (140) which, in the assembled state of the unlocking unit (100), is arranged in the housing (110) and can be arranged reversibly in the at least two different switching point positions (a), b)) with respect to the housing (110).

3. Unlocking unit (100) according to Claim 2, **characterized in that** the housing (110) has a receiving opening (110-1) which, in the assembled state of the unlocking unit (100), is engaged through at least by the integrated switching unit (130) or by the holding element (140) and the integrated switching unit (130), with the result that, in the case of the non-actuated rest position (0) of the pivotable actuating element (120), the switching unit (130) is arranged at a predefinable spacing from an actuating member (120-1) of the pivotable actuating element (120) in a manner which is dependent on the arrangement of the switching unit (130) in one of the at least two switching point positions (a), b)).

4. Unlocking unit (100) according to Claim 3, **characterized in that**, starting from the non-actuated rest position (0) of the pivotable actuating element (120), a first spacing can be set between the switching unit (130) and the actuating member (120-1) in a manner which is dependent on the arrangement of the switching unit (130) in a first switching point position (a)), which first spacing is overcome in the case of an actuation of the pivotable actuating element (120) by the first switching angle (α) into a first actuating position (1), as a result of which a first triggering switching point between the actuating member (120-1) and the switching unit (130) can be brought about.

5. Unlocking unit (100) according to Claim 3, **characterized in that**, starting from the non-actuated rest position (0) of the pivotable actuating element (120), a second spacing can be set between the switching unit (130) and the actuating member (120-1) in a manner which is dependent on the arrangement of the switching unit (130) in a second switching point position (b)), which second spacing is overcome in the case of an actuation of the pivotable actuating element (120) by a second pivoting angle (β) into a second actuating position (2), as a result of which a second triggering switching point between the actuating member (120-1) and the switching unit (130) can be brought about.

6. Unlocking unit (100) according to Claim 3, **characterized in that** the holding element (140) is arranged with the integrated switching unit (130) in the receiving opening (110-1) of the housing (110) such that it can be displaced with respect to the housing (110).

7. Unlocking unit (100) according to Claim 3, **characterized in that** the holding element (140) and the switching unit (130) are present in a stationary manner with respect to one another as a first prefabricated assembly part, and the pivotable actuating element (120) and the actuating member (120-1) are present in a stationary manner with respect to one another as a second prefabricated assembly part, which assembly parts can be assembled to form the unlocking unit (100), the actuating element (120) being mounted pivotably in the housing (110), and the holding element (140) being mounted displaceably in the receiving opening (110-1) of the housing (110).

8. Unlocking unit (100) according to Claim 7, **characterized in that** the housing (100) has an arcuate section at least in the region of the arranged holding element (140), with the result that the holding element (140) which is arranged in the housing (110) is arranged with the integrated switching unit (130) such that it can be displaced on a circular arc with respect to the housing (120), a radius of the circular arc being arranged radially with respect to a pivot axis (Y) of the actuating element (120) which can be pivoted with respect to the housing (100).

9. Vehicle having at least one structural component (200), in which an unlocking unit (100) according to at least one of Claims 1 to 8 is arranged.

10. Vehicle according to Claim 9, **characterized in that** the structural component (200) is an openable closure element, in particular a tailgate of the vehicle.

## Revendications

1. Unité de déverrouillage (100) pour le déverrouillage d'un élément de fermeture pouvant être ouvert d'un véhicule, comprenant un boîtier (110) présentant une unité de commutation (130) et un élément d'actionnement (120) pivotant par rapport au boîtier (110), lequel peut pivoter par rapport à l'unité de commutation (130) d'une position de repos non actionnée (0) vers au moins deux positions d'actionnement (1, 2), **caractérisée en ce que** l'unité de commutation (130) est agencée dans le boîtier (110) et peut être agencée de manière réversible dans au moins deux positions de point de commutation différentes (a), b)) par rapport au boîtier (110), de sorte que différents points de commutation de déclenchement peuvent être associés à l'élément d'actionnement pivotant (120) de l'unité de déverrouillage (100) en fonction d'un angle de commutation (α, β) de l'élément d'actionnement (120) pivotant à partir de la position de repos (0).

2. Unité de déverrouillage (100) selon la revendication 1, **caractérisée en ce que** l'unité de commutation (130) est agencée intégrée de manière fixe dans un élément de retenue (140), lequel est agencé à l'état monté de l'unité de déverrouillage (100) dans le boîtier (110) et peut être agencé de manière réversible dans les au moins deux positions de point de commutation différentes (a), b)) par rapport au boîtier (110) .

3. Unité de déverrouillage (100) selon la revendication 2, **caractérisée en ce que** le boîtier (110) comprend une ouverture de réception (110-1), laquelle est traversée à l'état monté de l'unité de déverrouillage (100) au moins par l'unité de commutation intégrée (130) ou par l'élément de retenue (140) et l'unité de commutation intégrée (130), de sorte que l'unité de commutation (130) est agencée dans la position de repos non actionnée (0) de l'élément d'actionnement pivotant (120) en fonction de l'agencement de l'unité de commutation (130) dans une des au moins deux positions de point de commutation (a), b)) à une distance prédéterminable d'un membre d'actionnement (120-1) de l'élément d'actionnement pivotant (120).

4. Unité de déverrouillage (100) selon la revendication 3, **caractérisée en ce qu'**à partir de la position de repos non actionnée (0) de l'élément d'actionnement pivotant (120) en fonction de l'agencement de l'unité de commutation (130) dans une première position de point de commutation (a)), une première distance entre l'unité de commutation (130) et le membre d'actionnement (120-1) peut être ajustée, qui est franchie lors d'un actionnement de l'élément d'actionnement pivotant (120) du premier angle de commutation (α) dans une première position d'actionnement (1), de sorte qu'un premier point de commutation de déclenchement entre le membre d'actionnement (120-1) et l'unité de commutation (130) peut être réalisé.

5. Unité de déverrouillage (100) selon la revendication 3, **caractérisée en ce qu'**à partir de la position de repos non actionnée (0) de l'élément d'actionnement pivotant (120) en fonction de l'agencement de l'unité de commutation (130) dans une deuxième position de point de commutation (b)), une deuxième distance entre l'unité de commutation (130) et le membre d'actionnement (120-1) peut être ajustée, qui est franchie lors d'un actionnement de l'élément d'actionnement pivotant (120) d'un deuxième angle de commutation (β) dans une deuxième position d'actionnement (2), de sorte qu'un deuxième point de commutation de déclenchement entre le membre d'actionnement (120-1) et l'unité de commutation (130) peut être réalisé.

6. Unité de déverrouillage (100) selon la revendication 3, **caractérisée en ce que** l'élément de retenue (140) avec l'unité de commutation intégrée (130) est agencé en coulissement par rapport au boîtier (110) dans l'ouverture de réception (110-1) du boîtier (110) .

7. Unité de déverrouillage (100) selon la revendication 3, **caractérisée en ce que** l'élément de retenue (140) et l'unité de commutation (130) se présentent de manière fixe l'un par rapport à l'autre en tant que premier composant d'assemblage préfabriqué et l'élément d'actionnement pivotant (120) et le membre d'actionnement (120-1) se présentent de manière fixe l'un par rapport à l'autre en tant que deuxième composant d'assemblage préfabriqué, qui peuvent être assemblés en l'unité de déverrouillage (100), l'élément d'actionnement (120) étant monté en pivotement dans le boîtier (110) et l'élément de retenue (140) étant monté en coulissement dans l'ouverture de réception (110-1) du boîtier (110).

8. Unité de déverrouillage (100) selon la revendication 7, **caractérisée en ce que** le boîtier (100) comprend une section en forme d'arc de cercle au moins dans la zone de l'élément de retenue agencé (140), de sorte que l'élément de retenue (140) agencé dans le boîtier (110) avec l'unité de commutation intégrée (130) est agencé en coulissement sur l'arc de cercle par rapport au boîtier (120), un rayon de l'arc de cercle étant agencé radialement par rapport à un axe de pivotement (Y) de l'élément d'actionnement (120) pivotant par rapport au boîtier (100).

9. Véhicule comprenant au moins un composant structural (200), dans lequel une unité de déverrouillage (100) selon au moins l'une quelconque des revendications 1 à 8 est agencée.

10. Véhicule selon la revendication 9, **caractérisé en ce que** le composant structural (200) est un élément de fermeture pouvant être ouvert, notamment un hayon arrière du véhicule.
